# EUROPEAN PATENT SPECIFICATION

(11) **EP 2 458 252 B1**
(45) Date of publication and mention of the grant of the patent: **06.03.2013**
(21) Application number: 10382323.3
(22) Date of filing: 30.11.2010
(51) Int. Cl.: F16K 3/00, F16K 41/00

(54) **Gate valve system with bayonet**
Schieberventilsystem mit Bajonett
Système de robinet-valve avec baïonnette

(43) Date of publication of application: 30.05.2012
(73) Proprietor: Belgicast Internacional, S.L.U., 48100 Munguia (ES)
(72) Inventor:
(74) Representative: Ezcurra Zufia, Maria Antonia

(56) References cited:
- WO-A1-2004/003413
- US-A- 4 699 359

## Description

The present invention relates to a gate valve system, in particular, a liquid gate valve system, in particular, a water gate valve system comprising a housing with an inlet and an outlet. The valve system is for controlling the flow of water between the inlet and the outlet in, for example, a water flow system and the like.

Document WO 2004/003413 discloses a gate valve system.

Conventionally, a gate valve system is known which comprises a housing with an inlet and an outlet. Generally, the parts of the conventional gate valve system are manufactured through a series of processes including machining, granulating/blasting, painting and assembling. Care must be taken while/in designing and manufacturing the parts of the gate valve system, as the parts of the gate valve system determines the quality of the gate valve system. Further, after the manufacturing processes of the parts of the gate valve system, there usually are some deformations thereby requiring rework in the manufacturing processes. These issues, therefore, increase the manufacturing time and costs. In addition, as the parts of the gate valve system are made of materials comprising metals, there are possibilities that the parts may rust (arising) due to moisture from the surroundings/oxidation.

Furthermore, it would be difficult to assemble and/or disassemble the gate valve system, for example, due to rusted and/or deformed parts. Further, when dealing with high pressure liquid system, an easily and quickly replaceable gate valve system is desired.

It is therefore an object of the present invention to propose a gate valve system comprising a sealing device which provides greater efficiency and durability of the sealing device and the gate valve system and, in addition, which saves time and money in manufacturing. Furthermore, the object of the present invention is also to provide a sealing device with which the corrosion and deformation problems can be overcome and which can be easily and quickly assembled and/or disassembled. This object is achieved with a gate valve system according to claim 1. Preferred embodiments are disclosed in the dependent claims.

By having the sealing device comprising the bayonet type coupling, manufacturing steps, like, for example, machining threads, reviewing and reworking the threads, in case of deformation, can be avoided. Further a bayonet coupled sealing device, which has a lock and unlock mode, can be easily and quickly assembled and/or disassembled, thereby allowing for the possibility of improved and efficient coupling. In addition, the corrosion/rust problems may be avoided, for example, by painting the surface and interiors of the sealing device, as there are preferably no threads of the sealing device, which could give rise to worries about possible deformations and reworking due to paintings. Thus, by having the sealing device comprising the bayonet type coupling, the durability of the system can possibly be increased.

According to an embodiment, the spring is an elastic ring, such as rubber ring. This can ensure that the spring forces the sealing device into a fixed position, as the elastic ring can be configured to have lesser rebound force and maintain clamping between the sealing device and the lid. This may further simplify the sealing mechanism since the elastic ring can additionally have a sealing function.

The sealing device may be made of a material comprising plastic. By having the sealing device made of material comprising plastic materials, corrosion/rust problems can be avoided, visual appearance can be enhanced and a lower weight gate valve system is possible.

The housing comprises an inlet and an outlet. The shaft together with the housing is configured to control the passage between the inlet and the outlet of the housing.

The gate valve system comprises a closing member configured to control the passage from the inlet to the outlet, wherein the shaft is adapted to move the closing member into the open position or closed position of the valve. By moving the closing member, with the shaft, into the opening of the housing, the closing member can control the passage from the inlet to the outlet of the housing, by assuming either a closed or an open position. The closed/open position corresponds to the situation where the closing member is moved down/up with respect to the housing.

The shaft may comprise a thread portion with which the closing member can be moved by rotating the shaft. By having a threaded portion in the shaft, the closing member can be moved easily and efficiently with respect to the housing. Further, the threaded shaft can remain still at its given position even when the pressure of the liquid exerts upward force against the base of the shaft and/or the closing member.

The gate valve system can comprise a guard configured to cover at least the open end of the lid, in particular, when the sealing device is coupled to the lid. Such a guard can protect the gate valve system, in particular, the sealing between the lid and the shaft from, for example, dusts, moisture and the like.

In the following, an embodiment of the invention will be described in relation to the enclosed Figures.
Figure 1 illustrates an exploded view of a gate valve system according to an embodiment of the invention,
Figure 2 shows a sealing device comprising a bayonet coupling and a lid configured to accommodate the sealing device according to the invention, and
Figure 3 illustrates the gate valve system in an assembled state.

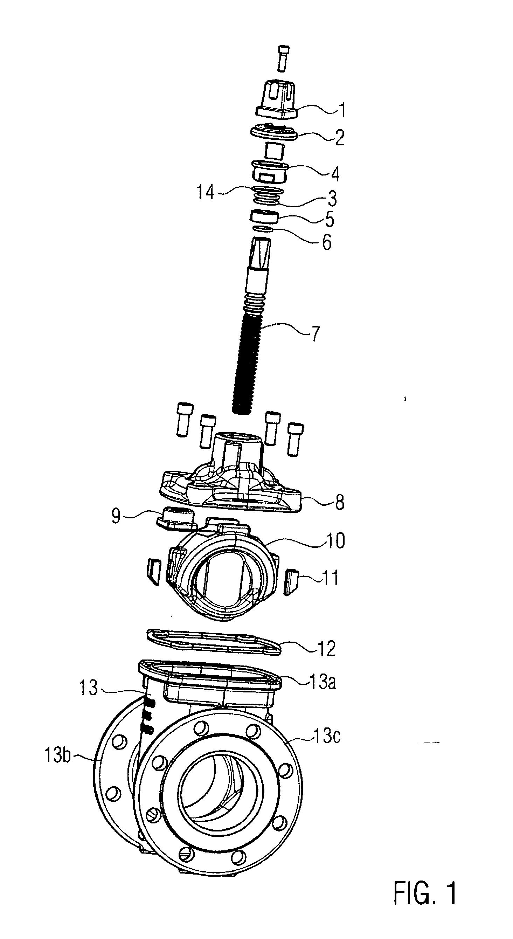

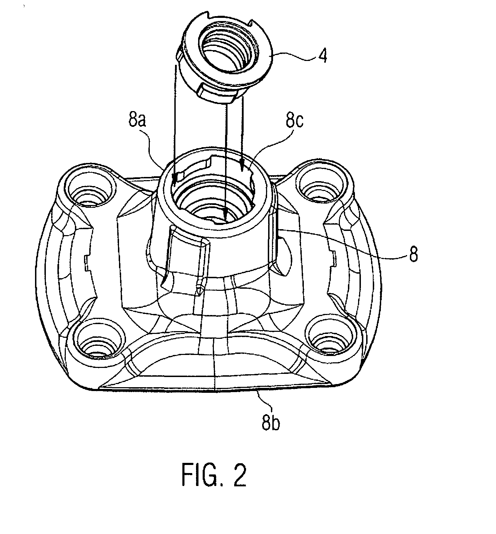

A gate valve system is illustrated in the exploded view of Figure 1 and is shown in Figures 2-3. The gate valve system comprises a housing 13, a lid 8, a shaft 7 and a sealing device 4.

The housing 13 comprises an inlet 13b and an outlet 13c on the sides of the housing 13. The inlet 13b and the outlet 13c may assume openings of any shape such as a polygon, or a circular and the like. According to an example, the inlet 13b and/or the outlet 13c is/are provided with a circular opening. A liquid, for example, water or any fluid may flow into the inlet 13b and flow out from the outlet 13c, in case the valve is open. On the upper side of the housing 13, an opening 13a is provided. The opening 13a may have shapes such as a polygon or a circular and the like. According to an example, the opening 13a is provided with a polygon, in particular, a (substantially) rectangular or a square, opening. The housing can be made of iron, aluminum, and the like.

The lid 8 may be placed over the upper portion of the housing 13, in particular, the opening 13a, such that the lid 8 may cover at least the opening 13a of the housing 13. According to an example, the lid 8 has an upper end portion 8a and a lower end portion or a base portion 8b. According to an example, the lid 8 may further comprise a narrow opening 8a in the upper end portion and a broad opening 8b in the lower end portion or the base portion 8b. The lid 8 may take shapes of a funnel, cone and the like. The base portion 8b of the lid 8 is configured to be coupled with the opening 13a of the housing 13. The base portion 8b of the lid 8 may include a plurality of holes corresponding to a plurality of holes in the upper portion of the housing 13 such that the base portion 8b of the lid 8 and the upper portion of the housing 13 may be coupled via respective plurality of bolts and nuts.

According to one example, the gate valve system may further comprise a support or sealing ring 12. The support or sealing ring 12 may be provided between the housing 13, in particular, the opening 13a of the housing 13, and the lid 8, in particular, the base portion 8b of the lid 8. The support ring 12 may be made of material comprising rubber and the like. As the support ring 12 is made of materials comprising rubber, and thus due to its elastic nature, it allows for a sealed coupling between the lid 8 and the housing 13.

The shaft 7 is a rotatable shaft having screw threads around the shaft 7. The shaft 7 extends longitudinally and the screw threads extend along at least a portion of the length of the shaft 7. The housing 13 is configured to accommodate at least a part of the shaft 7 which may extend through the lid 8, wherein the accommodated part includes at least a portion of the screw threads. The shaft 7 extends from outside the housing 13 through the opening 13a and the lid 8 and protrudes into the housing 13.

To the top of the shaft 7 a shaped element 1 may be attached e.g. with help of a screw such that a wheel for operating the valve can be fixed to the shaft.

Figures 1 and 2 illustrate the sealing device 4. The sealing device 4 is configured to surround the shaft 7 and to seal the shaft 7 against the lid 8. The sealing device 4 is fixed to the lid 8 via a bayonet coupling. The bayonet coupling is a type of coupling mechanism through which surfaces of, in particular, the sealing device 4 and the lid 8 are coupled. According to one embodiment, the sealing device 4 comprises a plurality of protrusions and/or grooves. The plurality of protrusions and/or grooves may be provided on the outer circumferential surface of the sealing device 4.

The sealing device 4 is configured to seal the circumference of the shaft 7 against the upper end portion of the lid 8, in particular, against an inner circumference of the narrow opening 8a of the lid 8. The narrow opening 8a of the lid 8, in particular, the inner circumference of the narrow opening 8a of the lid 8 comprises a plurality of grooves 8c and a spring and the sealing device 4 is configured to be accommodated inside the narrow opening 8a of the lid 8. The plurality of grooves 8c of the narrow opening 8a of the lid is configured to accommodate the plurality of protrusions of the sealing device 4. In case the narrow opening 8a of the lid 8 is configured to have a plurality of protrusions, the plurality of protrusions of the narrow opening 8a of the lid 8 are accommodated in the plurality of grooves of the sealing device 4.

To insert the sealing device 4 in the narrow opening 8a of the lid 8, the plurality of protrusions and/or grooves of the sealing device 4 and the plurality of grooves and/or protrusions 8c of the narrow opening 8a of the lid 8 are aligned such that protrusions of the sealing device 4 can be passed/pushed through the space provided by the grooves of the narrow opening 8a of the lid 8. Subsequently, the sealing device 4 is pushed along axial direction of the shaft and into the narrow opening 8a of the lid 8. This movement may be at least in the last part being done against the force of a spring. By holding the narrow opening 8a of the lid 8 still and rotating the sealing device 4 around it's center axis or around the shaft, the plurality of protrusions and/or grooves of the sealing device 4 are coupled to the plurality of grooves and/or protrusions 8c of the narrow opening 8a of the lid 8. The lid and the sealing device thereby engage with each other holding the sealing device in the lid. The direction of rotation can be clockwise or anticlockwise, when viewed from the outside onto the sealing device 4. Also, according to an example, both the sealing device 4 and the lid 8 could be rotated with respect to each other.

Further, the spring in the narrow opening 8a of the lid, by it's clamping force, forces the sealing device 4 into a fixed position (with the sealing device being engaged in the lid 8), defined by the protrusions and/or grooves of the sealing device 4 and the plurality of grooves and/or protrusions of the narrow opening 8a of the lid 8, thereby fixing the sealing device 4 in the lid 8. The spring may be made of material comprising rubber, or metal.

The shaft 7 is also sealed against the inner circumference of the narrow opening 8a of the lid 8. For this purpose, a sealing ring 6 is provided on the shaft 7, which contacts the inner surface of the lid 8.

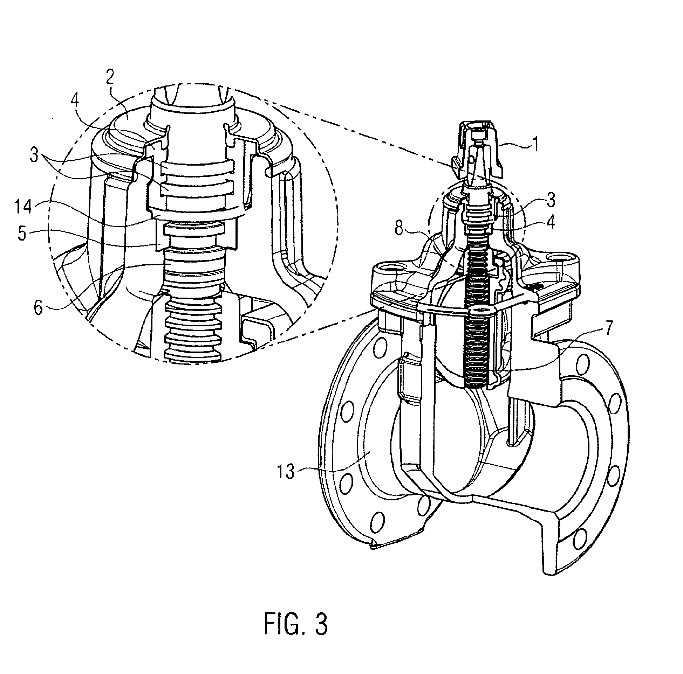

As can be seen in the enlarged view of Fig. 3 the sealing rings 3 are provided at least in part in a groove provided on the inner surface of the sealing device 4. In figure 1 it can be seen that on the shaft 7 also grooves are provided which accommodate the other part of the sealing rings 3. Further can be seen that the ring 14 which is a sealing ring and at the same time acts as a spring is provided between the sealing device 4 and the ring 5. The ring 5 abuts on a step of the inner surface of the opening 8a of the lid 8. Therefore if the sealing device 4 is pressed downwards it deforms the ring 14 which is backed by the ring 5. In the locked position of the sealing device 4 the sealing device 4 excerpts of slight pressure onto the ring 14 such that the sealing function of the ring 14 is achieved. Further it can be seen that the ring 5 cooperates with a protrusion of the shaft 7 in order to define the position of the shaft 7 in the up/down direction (lengthwise direction of the shaft 7).

Also in figure 3 the sealing ring 6 can be seen as being provided on the shaft and surrounding the shaft 7 and at the same time being in contact with the inner surface of the narrow opening 8a of the lid 8.

Further in the enlarged view of figure 3 it can be seen on the cut on the left side how a protrusion of the sealing device 4 is hold in the groove of the narrow opening 8a of the lid 8.

To decouple the sealing device 4 from the narrow opening 8a of the lid 8, the sealing device 4 can be rotated in the direction opposite to the direction rotated while coupling. Preferably, both the sealing device 4 and the lid 8 could be rotated with respect to each other in the direction opposite to the direction rotated while coupling. The plurality of protrusions and grooves of the sealing device 4 may be formed such that, in order to initiate this rotation movement for decoupling, it may be necessary to push the sealing device 4 along the shaft 7 towards the housing 13 in order to free the sealing device 4 such that it can be rotated in order to align the protrusions/grooves of the narrow opening 8a of the lid/sealing device 4 such that the sealing device 4 can be pulled along the length direction of the shaft 7 out of the lid 8. In order to push the sealing device 4 towards the housing 13, it may be necessary to push the sealing device 4 against the force of the spring in the narrow opening 8a of the lid 8. The sealing device and the lid can be formed such that without pushing the sealing device against the force of the spring the sealing device cannot be rotated in order to decouple it form the lid 8.

The sealing device 4 can be made of a material comprising plastic. By having the sealing device 4 made of material comprising plastic materials, corrosion/rust problems can be avoided. Further, visual appearance of the sealing device 4 within the valve system may be enhanced. In addition, a lower weight gate valve system may be obtained.

According to one embodiment of the present invention, the shaft 7 together with the housing 13 are configured to control the flow of liquid between the inlet 13b and the outlet 13c of the housing 13. To this end, preferably, the gate valve system is provided with a closing member 10. The closing member 10 is configured to control the liquid passage from the inlet 13b to the outlet 13c of the housing 13. The closing member 10 may be configured to be coupled with the threaded portion of the shaft 7 via screw threads of the closing member 10. The shaft 7 is adapted to move the closing member 10, by rotating the shaft 7, into the open position or closed position of the valve, that is, into a position to allow (open position) the flow of the liquid or stop (closed position) the flow of the liquid through the valve.

By moving the closing member 10, with the shaft 7, into the opening 13a of the housing 13, the closing member 10 can control the passage from the inlet 13b to the outlet 13c of the housing 13, by assuming either a closed or an open position. The closed/open position corresponds to the situation where the closing member 10 is moved down/up with respect to the housing 13. By having the threaded portion in the shaft 7, the closing member 10 can be moved easily and efficiently with respect to the housing 13. Further, the threaded shaft 7 can remain still at its given position even when the pressure of the liquid exerts upward force against the base of the shaft 7.

The gate valve system can be provided with a guard 2. Preferably, the guard 2 is configured to cover at least the narrow opening 8a of the lid 8 and preferably, at the same time, to cover the sealing device 4. In particular, when the sealing device 4 is coupled to the narrow opening 8a of the lid 8 together with the shaft 7, the guard 2 covers the opening 8a of the lid 8, such that the guard 2 can protect the gate valve system, in particular, the sealing device 4 between the lid 8 and the shaft 7 from, for example, dusts, moisture and the like. The guard 2 can be made of plastic.

The gate valve system is provided with a plurality of sealing rings 3 between the sealing device 4 and the shaft 7 and surrounding the shaft 7. The sealing rings 3 can be attached between the shaft 7 and the sealing device 4 and prevent the outflow of fluid between the shaft 7 and the sealing device 4. The different sealing rings of the plurality of sealing rings 3 are provided at different positions along the length of the shaft 7, thereby providing a cascaded sealing. Any fluid that coming from the housing 13, for example, accidentally, passes a first sealing ring, still can be prevented from flowing out of the valve by a second sealing ring, of the plurality of sealing rings 3.

The gate valve system can be provided with a/another sealing ring 6 surrounding the shaft 7 and in contact with an inner surface of the lid 8. Such a sealing ring 6 ensures a tighter sealing between the shaft 7 and the lid 8. This sealing ring 6 can be provided as a further sealing of the cascaded sealing mentioned above.

With the gate valve system according to the present invention, it is possible to obtain greater efficiency and durability of the sealing device and the gate valve system and, in addition, due to its structure, the manufacturing time and cost can be saved. Furthermore, with the sealing device of the present invention, the corrosion and deformation problems can be overcome and an improved sealing device is obtained which can be easily and quickly assembled and/or disassembled.

## Claims

1. A gate valve system comprising:
a housing (13);
a lid (8) for covering an opening (13a) of the housing (13);
a rotatable shaft (7) extending from outside the housing (13) through the lid (8) into the housing; and
a sealing device (4) for sealing the shaft (7) against the lid (8), wherein
- the sealing device (4) is coupled to the lid (8) by means of a bayonet coupling,
- the sealing device (4) comprises a plurality of protrusions and/or grooves,
- the open end (8a) of the lid (8) comprises a plurality of grooves and/or protrusions which couple with the protrusions or grooves of the sealing device (4) and
a spring,
**characterized in that**
- the spring is a sealing ring (14) located between the sealing device (4) and a ring (5) which abuts on a step of the inner surface of the opening 8a of the lid 8.
- sealing rings (3) are provided, being housed in part in grooves provided on the inner surface of the sealing device (4) and the other part of the sealing rings (3) are housed in grooves provided on the shaft (7).

2. The gate valve system according to claim 1 **characterised in that** the sealing ring (14) in the open end of the lid forces the sealing device (4) into a fixed position, defined by the protrusions and/or grooves of the sealing device (4) and the plurality of grooves and/or protrusions of the open end of the lid (8).

3. The gate valve system according to claim1 or 2, **characterised in that** the spring is an elastic ring, such as rubber ring.

4. The gate valve system according to claim 1, **characterised in that** the sealing device is made of a material comprising or consisting of plastic.

5. The gate valve system according to any of claims 1 to 4, **characterised in that** the housing (13) comprises an inlet and an outlet.

6. The gate valve system according to claim 1, **characterised by** a closing member (10) configured to control the passage for fluid from the inlet (13b) to the outlet (13c), wherein the shaft (7) is adapted to move the closing member (10) into the open position or closed position of the valve.

7. The gate valve system according to claim 6, **characterised in that** the shaft (7) comprises a thread portion with which the closing member (10) can be moved by rotating the shaft.

8. The gate valve system according to any of claims 1 to 7, **characterised by** a guard (2) configured to cover at least the open end (8a) of the lid (8), in particular, when the sealing device (4) is coupled to the lid (8).

## Patentansprüche

1. Ein Schieberventilsystem, bestehend aus:
einem Gehäuse (13);
einem Deckel (8) zur Abdeckung einer Öffnung (13a) im Gehäuse (13);
einem drehbaren Schaft (7), der außen vom Gehäuse (13) durch den Deckel (8) in das Gehäuse reicht; und
einer Dichtvorrichtung (4) zum Abdichten des Schaftes (7) gegenüber dem Deckel (8), wobei
- die Abdichtvorrichtung (4) durch einen Bajonettverschluss mit dem Deckel (8) verbunden ist,
- die Dichtvorrichtung (4) eine Vielzahl von Vorsprüngen und/oder Nuten umfasst,
- das offene Ende (8a) des Deckels (8) eine Vielzahl von Nuten und/oder Vorsprüngen aufweist, die in die Vorsprünge oder Nuten der Dichtvorrichtung passen (4) und
einer Feder.
**dadurch gekennzeichnet, dass**
- die Feder ein Dichtring (14) ist, der sich zwischen der Dichtvorrichtung (4) und einem Ring (5) befindet, der auf eine Stufe der Innenfläche der Öffnung 8a des Deckels 8 stößt.
- Dichtringe (3) vorgesehen sind, die teilweise in den an der Innenfläche der Dichtvorrichtung (4) angebrachten Nuten sitzen und der andere Teile der Dichtringe (3) sitzt in am Schaft (7) angebrachten Nuten.

2. Das Schieberventilsystem nach Anspruch 1, **dadurch gekennzeichnet, dass** der Dichtring (14) am offenen Ende des Deckels die Dichtvorrichtung (4) in eine feste Stellung zwingt, die durch die Vorsprünge und/oder Nuten der Dichtvorrichtung (4) und die Vielzahl der Nuten und/oder Vorsprünge am offenen Ende des Deckels (8) definiert wird.

3. Das Schieberventilsystem nach Anspruch 1 oder 2, **dadurch gekennzeichnet, dass** die Feder ein elastischer Ring ist, wie etwa ein Gummiring.

4. Das Schieberventilsystem nach Anspruch 1, **dadurch gekennzeichnet, dass** die Dichtvorrichtung aus einem Material besteht, das aus Kunststoff besteht oder diesen enthält.

5. Das Schieberventilsystem nach einem der Ansprüche 1 bis 4, **dadurch gekennzeichnet, dass** das Gehäuse (13) einen Einlass und einen Auslass aufweist.

6. Das Schieberventilsystem nach Anspruch 1, durch ein Schließglied (10) gekennzeichnet, das zur Steuerung des Durchflusses von Fluiden vom Einlass (13b) zum Auslass (13c) gestaltet ist, wobei der Schaft (7) zur Bewegung des Schließgliedes (10) in die offene oder geschlossene Stellung des Ventils angepasst ist.

7. Das Schieberventilsystem nach Anspruch 6, **dadurch gekennzeichnet, dass** der Schaft (7) einen Gewindeabschnitt aufweist, mit dem das Schließglied (10) durch Drehen des Schaftes bewegt werden kann.

8. Das Schieberventilsystem nach einem der Ansprüche 1 bis 7, durch einen Schutz (2) gekennzeichnet, die wenigstens zur Abdeckung des offenen Endes (8a) des Deckels (8) gestaltet ist, insbesondere, wenn die Dichtvorrichtung (4) mit dem Deckel (8) verbunden wird.

## Revendications

1. Un système de vanne à coulisse est constitué des éléments suivants :
un boîtier (13) ;
un couvercle (8) servant à couvrir un orifice (13a) dans le boîtier (13) ;
un arbre rotatif (7) s'étendant de l'extérieur du boîtier (13) à travers le couvercle (8) jusque dans le boîtier ; et
un dispositif d'étanchéité (4) pour plaquer hermétiquement l'arbre (7) contre le couvercle (8), où
- le dispositif d'étanchéité (4) est couplé avec le couvercle (8) par l'intermédiaire d'un couplage à baïonnette,
- le dispositif d'étanchéité (4) comprend un ensemble de protubérances et/ou de rainures,
- l'extrémité ouverte (8a) du couvercle (8) comprend un ensemble de rainures et/ou de protubérances, couplées avec les protubérances et/ou rainures du dispositif d'étanchéité (4), et un ressort.
et se **caractérise par le fait que**
- le ressort est une bague d'étanchéité (14) placée entre le dispositif d'étanchéité (4) et une bague (5) qui s'appuie sur un rebord de la surface interne de l'orifice (8a) du couvercle (8).
- une partie des bagues d'étanchéité (3) est logée dans les rainures existantes de la surface interne du dispositif d'étanchéité (4) et l'autre partie des bagues d'étanchéité (3) est logée dans les rainures existantes de l'arbre (7).

2. Le système de vanne à coulisse, conformément à la réclamation 1, se **caractérise par le fait que** la bague d'étanchéité (14) située dans l'extrémité ouverte du couvercle force le dispositif d'étanchéité (4) dans une position fixe, définie par les protubérances et/ou les rainures du dispositif d'étanchéité (4) et par l'ensemble des rainures et/ou des protubérances de l'extrémité ouverte du couvercle (8).

3. Le système de vanne à coulisse, conformément à la réclamation 1 ou 2, se **caractérise par le fait que** le ressort est une bague élastique, telle qu'une bague en caoutchouc.

4. Le système de vanne à coulisse, conformément à la réclamation 1, se **caractérise par le fait que** le dispositif d'étanchéité est constitué d'un matériau composé en tout ou en partie de plastique.

5. Le système de vanne à coulisse, conformément à n'importe laquelle des réclamations 1 à 4, se **caractérise par le fait que** le boîtier (13) comprend une entrée et une sortie.

6. Le système de vanne à coulisse, conformément à la réclamation 1, se **caractérise par le fait qu'**un coulisseau de fermeture (10) est configuré pour contrôler le passage du fluide entre l'entrée (13b) et la sortie (13c), et où l'arbre (7) est conçu pour déplacer le coulisseau de fermeture (10) en position ouverte ou fermée.

7. Le système de vanne à coulisse, conformément à la réclamation 6, se **caractérise par le fait que** l'arbre (7) comprend une partie filetée, grâce à laquelle le coulisseau de fermeture (10) peut être déplacé par la rotation de l'arbre.

8. Le système de vanne à coulisse, conformément à n'importe laquelle des réclamations 1 à 7, se **caractérise par le fait qu'**un dispositif de protection (2) est configuré pour couvrir au moins l'extrémité ouverte (8a) du couvercle (8), notamment lorsque le dispositif d'étanchéité (4) est couplé avec le couvercle (8).
